# EUROPÄISCHE PATENTSCHRIFT

(11) **EP 1 932 719 B1**
(45) Veröffentlichungstag und Bekanntmachung des Hinweises auf die Patenterteilung: **17.02.2010**
(21) Anmeldenummer: 07024219.3
(22) Anmeldetag: 13.12.2007
(51) Int. Cl.: B60P 7/08

(54) **Haltevorrichtung für Gepäckstangen**
Holding device for packing rods
Dispositif de retenue pour tronçons de bagages

(30) Priorität: 15.12.2006 DE 202006018870 U
(43) Veröffentlichungstag der Anmeldung: 18.06.2008
(73) Patentinhaber: YMOS GmbH, 55743 Idar-Oberstein (DE)
(72) Erfinder: Kley, Frank, 55767 Gimbweiler (DE)
(74) Vertreter: Ostermann, Thomas

(56) Entgegenhaltungen:
- FR-A- 2 675 442
- US-A- 4 091 745
- US-A- 4 700 917
- US-A- 5 236 153
- US-B1- 6 309 006
- US-B1- 6 585 465

## Beschreibung

Die Erfindung betrifft eine Haltevorrichtung zur Befestigung von Gepäckstangen, Netzen, Taschen oder dergleichen an in einem Gepäckraum von Fahrzeugen montierten Halteschienen mit einem Haltekörper, der in einer Verschiebestellung entlang der Halteschiene verschiebbar gelagert ist enthaltend ein beweglich gelagertes Klemmelement, das in einer Klemmstellung des Haltekörpers auf die Halteschiene drückt, und ein Betätigungselement zum Verbringen des Klemmelementes von einer Klemmposition in eine Nichtklemmposition, in der der Haltekörper entlang der Halteschiene verschiebbar ist.

Aus der US 4 700 917 A ist eine Haltevorrichtung zur Befestigung von Lasten an einem Fahrzeug bekannt, die einen Haltekörper vorsieht, der mittels eines Klemmelementes an einem T-Träger des Fahrzeugs festlegbar ist. Der Haltekörper weist auf einer dem T-Träger abgewandten Seite einen Haken auf, an dem die zu befestigenden Lasten befestigt werden können. Das Klemmelement ist als eine Schraube ausgebildet, die in einer Gewindebohrung des Haltekörpers einsetzbar ist und in einer Klemmstellung in Axialrichtung des Klemmelementes gegen den T-Träger drückt. Das Klemmelement dient hierbei als Drehelement, das mittels eines Werkzeugs betätigbar ist.

Aus der DE 20 2006 010 599 U1 ist eine Haltevorrichtung zur Befestigung von Ladegütern, Bändern und dergleichen in Fahrzeugen bekannt, die einen Haltekörper vorsieht, der entlang einer an einer Karosserie des Fahrzeugs befestigten Halteschiene verschiebbar gelagert ist. Dem Haltekörper ist ein beweglich gelagertes Rastelement zugeordnet, das in einer Klemmstellung des Haltekörpers unter Ausübung einer Haltekraft auf die Halteschiene drückt und den Haltekörper somit festlegt. Als Klemmelement ist ein Rastelement vorgesehen. Das Rastelement ist endseitig an einem Schenkel eines Hebels angeformt. Mittels einer Feder wird dieser Schenkel des Hebels selbsttätig gegen die Halteschiene gedrückt. Ein rechtwinklig zu dem Schenkel angeordneter weiterer Schenkel des Hebels dient als Betätigungselement, so dass durch Verschwenken des Hebels der Haltekörper von einer Klemmstellung in eine Nichtklemmstellung verbringbar ist. Nachteilig an der bekannten Haltevorrichtung ist, dass von einer Bedienperson zum Verschieben des Haltekörpers stets eine durch die Feder vorgegebene Haltekraft aufgebracht werden muss. Zudem besteht die Gefahr, dass sich die Bedienperson dabei Finger einklemmen kann.

Aufgabe der vorliegenden Erfindung ist es daher, eine Haltevorrichtung zur Befestigung von Gepäckstangen, Netzen, Taschen und dergleichen derart weiterzubilden, dass die Handhabung bzw. Bedienfreundlichkeit zum Betätigen eines entlang einer Halteschiene verschiebbar gelagerten Haltekörpers verbessert wird.

Zur Lösung dieser Aufgabe ist die Erfindung in Verbindung mit dem Oberbegriff des Patentanspruchs 1 dadurch gekennzeichnet, dass das Betätigungselement als ein um eine Drehachse bewegbares Drehelement ausgebildet ist, dass zum Verbringen des Haltekörpers in die Klemmstellung auf Stellmittel derart einwirkt, dass in einer Drehstellung des Drehelementes ein erstes Klemmelement in Querrichtung zu der Drehachse des Drehelementes gegen die Halteschiene drückt und ein zweites Klemmelement in Axialrichtung des Drehelementes gegen die Halteschiene drückt.

Der besondere Vorteil der Erfindung besteht darin, dass die Verschiebung eines Haltekörpers entlang einer Halteschiene ohne Aufwenden einer der Haltekraft eines Klemmelementes entgegen wirkenden Kraft erfolgen kann. In der Verschiebestellung des Haltekörpers befindet sich das Klemmelement lediglich in einer Anlageposition an der Halteschiene, ohne dass eine Klemmkraft auf die Halteschiene wirkt. Das Klemmelement wird von Stellmitteln beaufschlagt, die von einem Drehelement als Betätigungselement betätigbar sind. Bedienungsfreundlich kann das Verbringen des Haltekörpers von einer Verschiebestellung in eine Klemmstellung und umgekehrt durch Verdrehen eines Drehelementes um eine Drehachse bewirkt werden, wobei die Drehachse senkrecht zur Halteschiene verläuft. Vorteilhaft kann mittels des Drehelementes auf Stellmittel eingewirkt werden, dass ein Klemmelement in Axialrichtung des Drehelementes, insbesondere senkrecht zu einer Vorderseite der Halteschiene mit einer Klemmkraft drückt und dass ein weiteres Klemmelement mit einer Klemmkraft in Querrichtung zum Drehelement gegen die Halteschiene drückt. Durch kombinierte Anwendung beider Klemmelemente kann eine sichere Fixierung des Haltekörpers in der Klemmstellung desselben bewirkt werden.

Nach einer bevorzugten Ausführungsform der Erfindung umfasst das stellmittel ein Drehbewegungsumwandlungsorgan, das zum einen einen Axialbewegungsanschluss zur Beaufschlagung des axial wirkenden Klemmelementes und einen Querbewegungsanschluss zur Beaufschlagung eines quer zur Drehachse des Drehelementes wirkenden Klemmelementes aufweist. Vorteilhaft kann hierdurch eine Klemmung des Haltekörpers in zwei zueinander senkrecht stehenden Querrichtungen zu der langgestreckten Halteschiene übertragen werden.

Nach einer ersten Variante eines Querbewegungsanschlusses kann dieser durch eine Exzenterfläche gebildet sein, die parallel versetzt zur Drehachse des Drehelements drehbar ist und mit seiner Umfangsfläche über eine Feder auf das als Rasthaken ausgebildete Klemmelement einwirkt. An der Exzenterfläche kann ein axial verlaufender Nocken ausgebildet sein, der ein axiales Verschieben des als Druckplatte ausgebildeten weiteren Klemmelementes bewirkt.

Nach einer zweiten Variante der Erfindung kann als Stellmittel eine Stellbuchse vorgesehen sein, die über einen Ohrenabschnitt mit einer Anlaufschräge verfügt. Durch Verdrehung des Drehelementes bzw. des drehfest mit derselben verbundenen Stellbuchse kann somit zum einen auf ein erstes als schwenkbarer Rasthaken ausgebildetes Klemmelement eingewirkt werden, so dass das Klemmelement seitlich in einer ersten Querrichtung auf die Halteschiene drückt, vorzugsweise durch Hintergreifen einer Oberseite der Halteschiene. Durch weiteres Verdrehen der Stellbuchse wird eine Überhöhung des Ohrenabschnitts zu einer Aufnahme des Haltekörpers geschaffen, so dass mittels einer an dem überhöhten Ohrenabschnitt angelegten Druckfeder das weitere Klemmelement in eine Klemmposition verbracht wird, in der es in einer zweiten Querrichtung, vorzugsweise senkrecht zu der Oberseite der Halteschiene, wirkt. Vorteilhaft wird hierdurch auf einfache Weise eine sichere und dauerhafte Festlegung des Haltekörpers an zwei Angriffspunkten der Halteschiene ermöglicht. Durch Verdrehen des Klemmelementes in umgekehrter Richtung, beispielsweise um 90°, können die Klemmelemente auf einfache Weise aus der Klemmposition in die Nichtklemmposition verbracht werden, so dass der Haltekörper in Längsrichtung der Halteschiene verschiebbar ist. Vorzugsweise liegt mindestens ein Klemmelement in der Nichtklemmposition desselben derart an der Halteschiene an, dass ein selbsttätiges Verschieben des Haltekörpers vermieden wird. Hierdurch kann ein unerwünschtes Verschieben des Haltekörpers während der Fahrt auch dann vermieden werden, wenn sich der Haltekörper in der Verschiebestellung befindet.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:

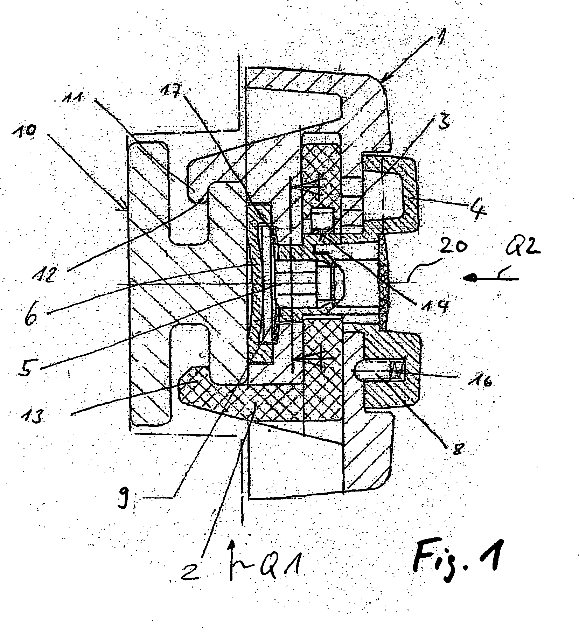

- Figur 1: einen Querschnitt durch eine Haltevorrichtung nach einer ersten Ausführungsform,
- Figur 2: eine Explosionsdarstellung einer Haltevorrichtung nach einer zweiten Ausführungsform,
- Figur 3: einen Explosionsdarstellung der Haltevorrichtung gemäß Figur 2 von einer gegenüberliegenden Seite gesehen,
- Figur 4: einen Querschnitt durch die Haltevorrichtung nach der zweiten Ausführungsform in einer Nichtklemmstellung eines Haltekörpers und
- Figur 5: einen Querschnitt durch die Haltevorrichtung gemäß der zweiten Ausführungsform in einer Klemmstellung des Haltekörpers.

Eine erfindungsgemäße Haltevorrichtung dient quasi als Adapter zur Befestigung von Gepäckstangen, Netzen, Taschen und dergleichen an Halteschienen, die in einem Gepäckraum von Fahrzeugen an einer aufrechten Innenwand befestigt sind.

Beispielsweise kann sich an der Haltevorrichtung eine Gepäckstange anschließen, die sich zwischen zwei gegenüberliegenden Halteschienen in dem Gepäcksraum des Fahrzeugs erstreckt.

Nach einer ersten Ausführungsform der Haltevorrichtung ist ein Haltekörper 1. vorgesehen, der an einer doppel-T-förmigen Schiene 10 gehaltert ist. Der Haltekörper 1 weist einen zangenförmigen Vorsprung 12 auf, der um einen von der Karosseriewand abstehenden vorderen Abschnitt der Schiene 10 herumgelegt ist. Auf einer gegenüberliegenden Seite der Schiene 10 hintergreift ein als Rasthaken 2 ausgebildetes Klemmelement mit seiner Nase 13 die Schmalseite des vorderen Abschnitts der Schiene 10.

In einem zentralen Bereich des Haltekörpers 1 erstreckt sich ein als Betätigungselement ausgebildeter Drehknopf 4, der um eine Drehachse 20 in dem Haltekörper 1 gelagert ist. Der Drehknopf 4 ist drehfest mit einem Exzenter 14 verbunden, der eine in Umfangsrichtung verlaufende Exzenterfläche aufweist. Bei Verdrehung des Drehknopfes 4 aus einer Verschiebestellung in eine Klemmstellung um beispielsweise 45° übt die Exzenterfläche eine Kraft auf eine Blattfeder 3 auf, so dass der Rasthaken 2 in einer ersten Querrichtung Q1 seitlich zu der Schiene 10 in die Klemmposition bewegt wird und somit den Haltekörper 1 an der Halteschiene 10 einspannt.

Der Exzenter 14 weist einen axial verlaufenden Nocken 17 auf, der beim Verdrehen des Drehknopfes 4 in einer zweiten Querrichtung Q2 auf ein als axial verschiebliches Druckstück 5 wirkt, das auf eine in axialer Richtung federnd ausgelegte Druckplatte 6 (weiteres Klemmelement) wirkt. Die Druckplatte 6 wird somit in der Klemmstellung auf eine Oberseite bzw. Flachseite der Schiene 10 gedrückt. Da die Druckplatte 6 im Bereich des Druckstücks 5 federnd ausgelegt ist, kann dieser Vorgang immer wiederholt werden, ohne dass die Klemmkraft auf der Schiene nachlässt.

Zur Montage des Haltekörpers 1 an der Halteschiene 10 befindet sich der Drehknopf 4 in einer Nullstellung, in der der lichte Abstand zwischen dem Vorsprung 12 des Haltekörpers 1 und der Nase 13 des Rasthakens 2 größer ist als die Quererstreckung des vorderen Bereiches der Halteschiene 10. Auf diese Weise kann der Haltekörper 1 auf die Halteschiene 10 aufgesetzt werden und mittels Verdrehung des Drehknopfes 4 um 45° in eine Verschiebestellung verbracht werden, in der die Nase 13 des Rasthakens 2 den vorderen Bereich der Schiene 10 hintergreift und der Haltekörper 1 entlang der Schiene 10 verschiebbar ist.

Der Drehknopf 4 hat die Verschiebestellung erreicht, wenn mittels einer am Kopf des Drehknopfes 4 in einer Ausnehmung gelagerte Rasthülse 8 mittels Druckfeder 16 in einer Ausnehmung des Haltekörpers 1 einrastet und somit den Drehknopf 4 arretiert.

Durch weiteres Verdrehen des Drehknopfes 4 um 45° in die Klemmstellung werden zum einen der Rasthaken 2 und zum anderen die axial bewegliche Druckplatte 6 in die Klemmposition verbracht.

In der Klemmstellung wird der Drehknopf 4 durch einen Raststift 15 gehalten, so dass ein unbeabsichtigtes Lösen des Drehknopfes 4 und somit Lockern des Haltekörpers 1 verhindert wird.

In dem ersten Ausführungsbeispiel dient der Exzenter 14 als Drehbewegungsumwandlungsorgan, wobei die umlaufenden Exzenterflächen als Querbewegungsanschluss zur Beaufschlagung des Rasthakens 2 und der Nocken 17 als Axialbewegungsanschluss zur Beaufschlagung des Druckstückes 5 dienen.

In der Verschiebestellung liegt die Nase 13 des Rasthakens 2 lediglich an der Schiene 10 an, ohne eine Klemmkraft auszuüben. Die Druckplatte 6 liegt in dieser Verschiebestellung ebenfalls ohne Klemmwirkung an der Schiene 10 an, wobei eine Wellscheibe 9 zwischen der Druckplatte 6 und dem Druckstück 5 für einen Toleranzausgleich sorgt.

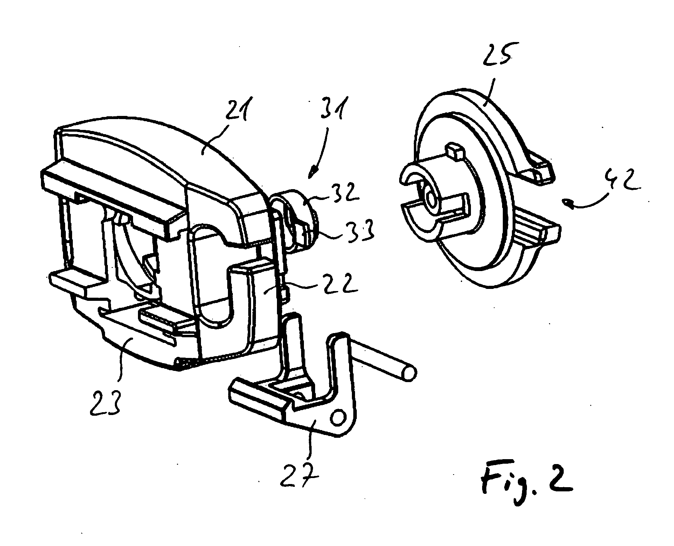

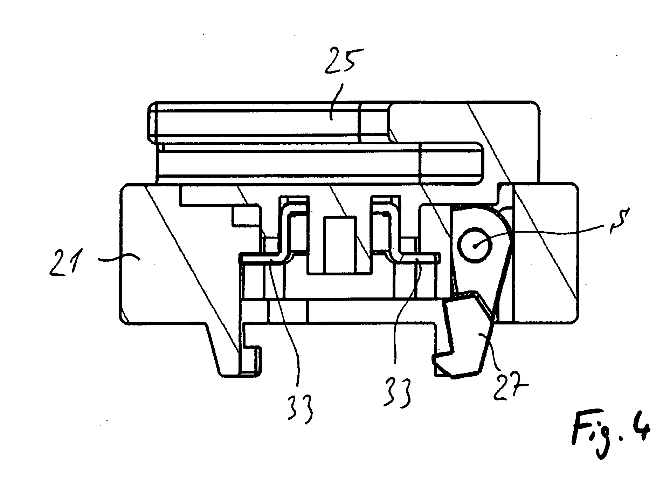

Nach einer zweiten Ausführungsform der Erfindung gemäß den Figuren 2 bis 5 ist eine Haltevorrichtung zur Befestigung von Gepäckstangen oder dergleichen vorgesehen mit einem Haltekörper 21, der an gegenüberliegenden Stirnseiten jeweils Haltearme 22 aufweist, die derart geformt sind, dass beispielsweise Bänder oder dergleichen an dem Haltekörper 21 eingehängt werden können. Die Haltearme 22 erstrecken sich vorzugsweise paarweise von einem Mittelteil 23 des Haltekörpers 21 in Längsrichtung einer Halteschiene 24.

Das Mittelteil 23 des Haltekörpers 21 ist tellerförmig ausgebildet zur Aufnahme eines Drehelementes 25, das an dem Mittelteil 23 um eine senkrecht zu einer Vorderseite 26 der Halteschiene 24 verlaufende Drehachse D gelagert ist. Das Drehelement 25 dient als Betätigungselement zum Verbringen eines ersten Klemmelementes 27 und eines zweiten Klemmelementes 28 von einer Nichtklemmposition, in der der Haltekörper 21 entlang der Halteschiene 24 verschiebbar gelagert ist (Verschiebestellung), in eine Klemmposition, in der der Haltekörper 21 an der Halteschiene 24 fixiert ist (Klemmstellung), und umgekehrt. Das erste Klemmelement 27 ist als ein Rasthaken ausgebildet, der um eine senkrecht zur Drehachse D verlaufende Schwenkachse S schwenkbar in dem Haltekörper 21 gelagert ist. Die Schwenkachse S verläuft parallel zu der Längserstreckung der Halteschiene 24. Der Rasthaken 27 ist federnd gelagert, so dass der Haltekörper 21 zur Montage an der Halteschiene 24 unter Verschwenken des Rasthakens 27 entgegen der Halteschiene 24 in eine Verschiebestellung eingeschnappt werden kann (Schnappverbindung). Hierbei wird der Rasthaken 27 entgegen einer nicht dargestellten Drehfeder nach außen gedrückt und hintergreift dann unter Beaufschlagung der Federkraft mit einer Nase 29 die zumindest T-förmige Halteschiene 24 an einer Rückseite 30 derselben.

In der Verschiebestellung des Haltekörpers 21 ist dieser an eine beliebige Stelle der Halteschiene 24 verschiebbar. Zum Verbringen des Haltekörpers 21 von der Verschiebestellung in eine Klemmstellung wird das Drehelement 25 um 90° verdreht. Zum Verbringen des Rasthakens 27 in die Klemmposition einerseits und zum Verbringen des als Druckplatte ausgebildeten zweiten Klemmelementes 28 in die Klemmposition dient als Stellmittel ein Drehbewegungsumwandlungsorgan 31, das auf einer der Halteschiene 24 zugewandten Seite des Drehelementes 25 in einer Aufnahme derselben drehfest mit dem Drehelement 25 gelagert ist. Das Drehbewegungsumwandlungsorgan 31 ist als eine Stellbuchse 31 ausgebildet, die mit einem Zentralabschnitt 32 drehfest mit dem Drehknopf 25 verbunden ist. Darüber hinaus weist die Stellbuchse 31 einen radial abragenden Ohrenabschnitt 33 mit einer in Umfangsrichtung verlaufenden Anlaufschräge 39 auf. Die Anlaufschräge 39 bildet somit eine in einem spitzen Winkel umlaufende Schrägfläche, die in Abhängigkeit von der Drehstellung des Drehknopfes 25 mit einer ansteigenden Kraft auf eine Führungsfläche 34 des Rasthakens 27 drückt, so dass dieser um die Schwenkachse S in die Klemmposition verdreht wird, in der der Rasthaken 27 in einer ersten Querrichtung Q1 auf die Halteschiene 24 drückt. Die Schrägfläche 39 der Stellbuchse 31 wirkt hierbei als Querbewegungsanschluss und zusammen mit einem Stellhebel 40 des Rasthakens 27 als ein Querbewegungsmittel. In der Klemmposition des Rasthakens 27 liegt der Stellhebel 40 an einer Anschlagfläche 41 des Haltekörpers 21 an.

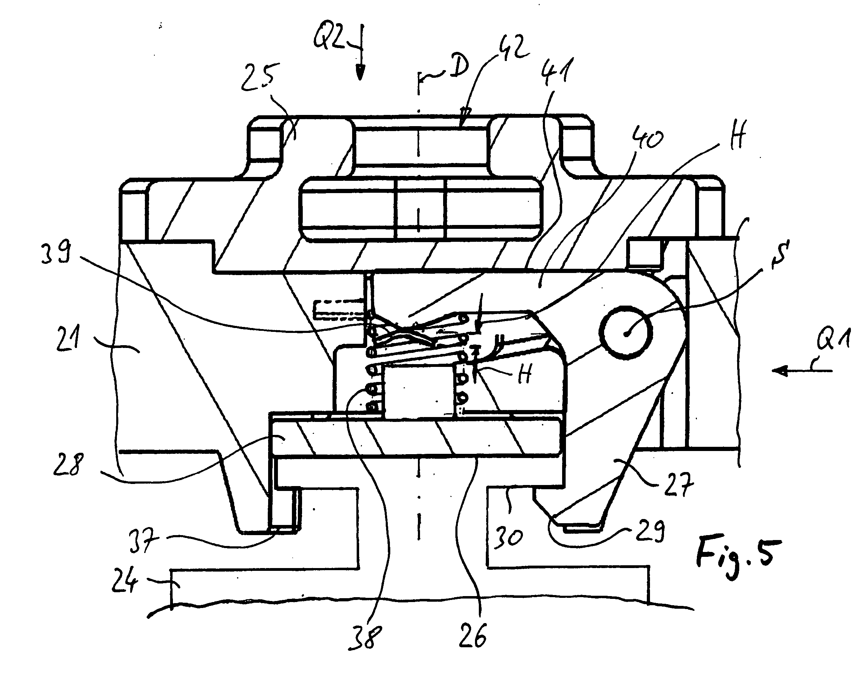

Zum anderen wirkt die Schrägfläche 39 als ein Axialbewegungsanschluss der Stellbuchse 31, da mit weiteren Verdrehen der Stellbuchse 31 die maximale Höhe der Schrägfläche 39 erreicht wird, in der die Spitze der Schrägfläche 39 an der Führungsfläche 34 des Rasthakens 27 anliegt, siehe Figur 5. Da der Stellhebel 40 nicht in Richtung des Drehelementes 25 ausweichen kann, bewirkt diese "Überhöhung" des Ohrenabschnitts 33, dass die Feder 38 mit einer verstärkten Federkraft auf die Druckplatte 28 wirkt und damit die Druckplatte 28 in die Klemmposition verbracht wird. Nachdem der Stellhebel 40 an der Anschlagfläche 41 zur Anlage gekommen ist, wird durch Weiterverdrehen des Drehelementes 25 unter Erhöhung der Schrägfläche 39 die Stellbuchse 31 nach und nach axial in Richtung der Halteschiene 24 verschoben, so dass die Axialfeder 38 zusammengedrückt und eine erhöhte Federkraft auf die Druckplatte 28 wirkt. Die maximale Höhe H der Anlaufschräge 39 ist so ausgelegt, dass bei Angreifen des spitzen Abschnitts der Anlaufschräge 39 an der Führungsfläche 34 des Stellhebels 40 die Axialfeder 38 in Axialrichtung Q2 gedrückt wird.

Der Ohrenabschnitt 33 dient somit abschnittsweise zum einen als Querbewegungsstellmittel zur Beaufschlagung des Rasthakens 27 und zum anderen als Axialbewegungsmittel zur Beaufschlagung der Druckplatte 28. Der Ohrenabschnitt 33 bildet als Stellfläche zum Verbringen des Rasthakens 27 und der Druckplatte 28 von der Klemmposition in die Nichtklemmposition und umgekehrt.

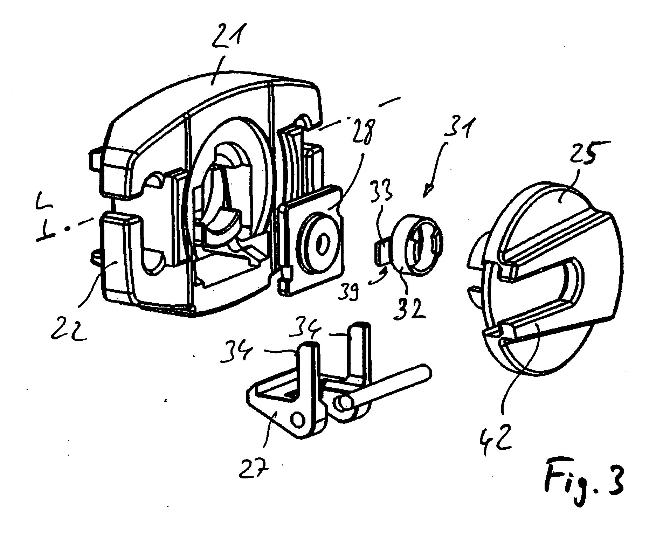

In den Figuren 2 und 3 ist der Einfachheit halber die Axialfeder 38 nicht dargestellt. Die Druckplatte wird in eine entsprechende Aufnahme des Haltekörpers 21 von einer der Halteschiene zugewandten Seite desselben eingesetzt und verliersicher gehalten. Zwischen der Druckplatte 28 und der Stellbuchse 31 ist die Axialfeder 38 angeordnet. In den Explosionsdarstellungen gemäß den Figuren 2 und 3 sind das Drehelement 25 und die Stellbuchse 31 in einer Position dargestellt, in der sich der Haltekörper 21 in einer Klemmstellung befindet, damit das Drehelement 25 über 90° hinaus verdreht werden kann, ist ein nicht dargestellter Anschlag vorhanden.

Zum Verbringen des Haltekörpers 21 aus der Klemmstellung in die Verschiebestellung wird das Drehelement 25 um 90° zurück gedreht, so dass die Ohrenabschnitte 33 der Stellbuchse 31 quer zu einer Längsachse L des Haltekörpers 21 orientiert angeordnet sind. In dieser Stellung ist eine auf einer dem Haltekörper 21 abgewandten Seite des Drehelementes 25 angeordnete Ausnehmung 42 in vertikaler Richtung nach oben offen ausgebildet, so dass ein Endstück einer Gepäckstange in die Ausnehmung 42 einsetzbar ist. Durch Verdrehen des Drehelementes 25 in die Klemmstellung um 90° in die eine oder andere Richtung wird zugleich ermöglicht, dass die Gepäckstange verliersicher an dem Drehelement 25 gehaltert ist.

Zur Demontage des Haltekörpers 21 wird dieser in der ersten Querrichtung Q1 unter der entgegen der Federkraft der dem Rasthaken 27 zugeordneten Drehfeder aufbringenden Kraft verschoben, bis ein Vorsprung 37 des Haltekörpers 21 in Außereingriff mit der Halteschiene 24 ist. Der Haltekörper 21 kann dann durch eine Drehbewegung zum Fahrzeuginneren hin von der Schiene 24 entfernt werden.

Der Haltekörper 21 weist einen Anschlag auf, so dass das Drehelement 25 aus der Verschiebestellung jeweils nur um 90° in der einen oder anderen Richtung die Klemmstellung verdreht werden kann.

Zur Demontage des Haltekörpers 21 von der Halteschiene 24 wird der Haltekörper 21 in Querrichtung Q1 manuell verschoben, bis ein Vorsprung 37 des Haltekörpers 21 sich in Außereingriffstellung zu der Halteschiene befindet. Der Haltekörper 21 kann dann durch eine Kippbewegung von der Halteschiene 24 weg unter Anlage des Rasthakens 27 an der Halteschiene 24 entfernt werden.

Die Axialfeder 38 ermöglicht in der Klemmstellung des Haltekörpers 21 insbesondere einen Toleranzausgleich.

## Patentansprüche

1. Haltevorrichtung zur Befestigung von Gepäckstangen, Netzen, Taschen oder dergleichen an in einem Gepäckraum von Fahrzeugen montierten Halteschienen (10, 24) mit einem Haltekörper (1, 21), der in einer Klemmstellung an der Halteschiene (10; 24) festgelegt ist und der in einer Verschiebestellung entlang der Halteschiene (10, 24) verschiebbar gelagert ist enthaltend ein beweglich gelagertes Klemmelement (2, 6; 27, 28), das in einer Klemmposition den Haltekörper (1, 21) an der Halteschiene (10, 24) festlegt, und ein Betätigungselement (4) zum verbringen des Klemmelementes (2, 6; 27, 28) von der Klemmposition in eine Nichtklemmposition, in der der Haltekörper (1, 21) entlang der Halteschiene (10, 24) verschiebbar ist, **dadurch gekennzeichnet, dass** das Betätigungselement (4) als ein um eine Drehachse (D) bewegbares Drehelement (25) ausgebildet ist, dass zum Verbringen des Haltekörpers (1, 21) in die Klemmstellung auf Stellmittel (27, 28, 31, 33) derart einwirkt, dass in einer Drehstellung des Drehelementes (25) ein erstes Klemmelement (27) in Querrichtung zu der Drehachse (D) des Drehelementes (25) gegen die Halteschiene (24) drückt und ein zweites Klemmelement (28) in Axialrichtung des Drehelementes (25) gegen die Halteschiene (24) drückt.

2. Haltevorrichtung nach Anspruch 1, **dadurch gekennzeichnet, dass** die Stellmittel (27, 28, 31, 33) eine Drehbewegungsumwandlungsorgan (31) umfassen, das drehfest mit dem Drehelement (25) verbunden ist und das zum einen einen Querbewegungsanschluss (33) zur Beaufschlagung des ersten Klemmelementes (27) und zum anderen einen Axialbewegungsanschluss (33) zur Beaufschlagung des zweiten Klemmelementes (28) aufweist.

3. Haltevorrichtung nach Anspruch 1 oder 2, **dadurch gekennzeichnet, dass** der Axialbewegungsanschluss (33) des Drehbewegungsumwandlungsorgans (31) eine quer zur Axialrichtung des Drehelementes (25) verlaufende Stellfläche (6) aufweist, die über eine vorgespannte Axialfeder (38) auf das zweite Klemmelement (28) drückt.

4. Haltevorrichtung nach einem der Ansprüche 1 bis 3, **dadurch gekennzeichnet, dass** der Querbewegungsanschluss des Drehbewegungsumwandlungsorgans (31) eine in Umfangsrichtung verlaufende Exzenterfläche (14) oder eine in Umfangsrichtung verlaufende Schrägfläche (33) weist.

5. Haltevorrichtung nach einem der Ansprüche 1 bis 4, **dadurch gekennzeichnet, dass** als Drehbewegungsumwandlungsorgan (31) eine Stellbuchse (31) vorgesehen ist mit einem Zentralabschnitt (32) zur Lagerung in einer Aufnahme des Drehelements (25) und einem radial nach außen hin anschließenden Ohrenabschnitt (33), der mit mindestens einer Anlaufschräge (39) versehen ist zur Bildung einer mit einer Führungsfläche (34) des ersten Klemmelements (27) zusammenwirkenden und mit dem zweiten Klemmelement (28) zusammenwirkenden Schrägfläche.

6. Haltevorrichtung nach einem der Ansprüche 1 bis 5, **dadurch gekennzeichnet, dass** die Anlaufschräge (39) der Schrägfläche (33) eine solche Länge und/oder Steigung aufweist, dass in der Klemmstellung des Haltekörpers (1, 21) der axial zu der Druckfeder (38) angeordnete Ohrenabschnitt (33) um einen solchen Abstand (H) von einer Auflagefläche (36) des Haltekörpers (21) abragt, dass das zweite Klemmelement (28) an einer Vorderseite (26) der Halteschiene (24) verspannt ist.

7. Haltevorrichtung nach einem der Ansprüche 1 bis 6, **dadurch gekennzeichnet, dass** die Drehachse (D) des Drehelementes (25) senkrecht zu der Vorderseite (26) der Halteschiene (24) verläuft.

8. Haltevorrichtung nach einem der Ansprüche 1 bis 7, **dadurch gekennzeichnet, dass** der Rasthaken (27) um eine Schwenkachse (S) verschwenkbar an dem Haltekörper (21) gelagert ist, wobei die Schwenkachse (S) senkrecht zu einer Drehachse (D) des Drehelementes (25) angeordnet ist.

9. Haltevorrichtung nach einem der Ansprüche 1 bis 8, **dadurch gekennzeichnet, dass** der Haltekörper (21) eine Anschlagfläche (41) aufweist, an der ein Stellhebel (40) des Rasthakens (27) in der Klemmposition desselben anliegt, und dass die Anlaufschräge (39) derart ausgebildet ist, dass eine maximale Höhe (H) der Anlaufschräge (39) größer ist als ein maximaler Schwenkweg des Stellhebels (40) in axialer Richtung (Q2).

10. Haltevorrichtung nach einem der Ansprüche 1 bis 9, **dadurch gekennzeichnet, dass** die Druckplatte (28) in eine Aufnahme des Haltekörpers (21) in Axialrichtung bewegbar angeordnet ist.

11. Haltevorrichtung nach einem der Ansprüche 1 bis 10, **dadurch gekennzeichnet, dass** das Drehelement (25) eine Ausnehmung (42) aufweist, derart, dass eine in die Ausnehmung (42) eingelassenes Ende einer Gepäckstange in der Klemmstellung des Haltekörpers (21) verliersicher an dem Drehelement (25) gehaltert ist.

## Claims

1. Holding device for attaching luggage rods, nets, bags or such like to holding rails (10, 24) arranged inside the trunk of a motor vehicle which device comprises a retaining body (1, 21) that is fixed to said holding rails (10, 24) while in clamped position and shiftable along said rails (10, 24) while in unclamped position wherein said retaining body includes a movable clamping element (2, 6, 27, 28) which when in a clamped state acts to keep the retaining body (1, 21) to the holding rails (10, 24), and an operating element (4) to bring the clamping element (2, 6, 27, 28) from a clamped to an unclamped position in which latter the retaining body (1, 21) is shiftable along the holding rail (10, 24), **characterized by** the fact that the operating element (4) is in the form of a swivel element (25) adapted to move around a swivel axis (D) that acts on adjusting means (27, 28, 31, 33) in such a way as to adjust the retaining body to its clamped position so that with the swivel element (25) in swivel position a first clamping element (27) imparts pressure to the holding rail (24) in transversal direction of the swivel axis (D) and a second clamping element (28) exerts pressure on the holding rail (24) in axial direction of the swivel element (25).

2. Holding device according to Claim 1, **characterized by** the fact that the adjusting means (27, 28, 31, 33) comprise a rotational movement converting unit (31) which is fixedly attached to the swivel element (25) and which on the one hand includes a transversal movement connector (33) to actuate the first clamping element (27) and on the other hand an axial movement connector (33) to operate the second clamping element (28).

3. Holding device according to Claim 1 or 2, **characterized by** the fact that the axial movement connector (33) of the rotational movement converting unit (31) is provided with an adjusting face (6) which extends cross to the axis of the swivel element (25) and which acts to exert pressure on the second clamping element (28) via a pretensioned axial spring (38).

4. Holding device according to any of the preceding Claims 1 to 3, **characterized by** the fact that the transversal movement connector of the rotational movement converting unit (31) is provided with a circumferential eccentric face (14) or a circumferential angular face (33).

5. Holding device according to any of the preceding Claims 1 to 4, **characterized by** the fact that the rotational movement converting unit (31) is in the form of an adjusting bush (31) having a central section (32) adapted to fit into a seat provided in the swivel element (25) and an adjoining lug section (33) which extends radially outward and which comprises at least one angular contact face (39) to form a slant face (34) that coacts with a guide face (34) of the first clamping element (27) as well as with the second clamping element (28).

6. Holding device according to any of the preceding Claims 1 to 5, **characterized by** the fact that the length and/or slope of the angular contact face (39) of said slant face (33) is such that with the retaining body (1, 21) in clamped position the lug section (33) arranged in axial relation to the compression spring (38) protrudes from a seat face (36) of the retaining body (21) to such an extent that the second clamping element (28) gets clamped to a front face (26) of the holding rail (24).

7. Holding device according to any of the preceding Claims 1 to 6, **characterized by** the fact that the swivel axis (D) of the swivel element (25) extends perpendicular to the front face (26) of the holding rail (24).

8. Holding device according to any of the preceding Claims 1 to 7, **characterized by** the fact that a latch hook (27) is fitted to the retaining body (2) in a way permitting swivel movement around a swivel axis (S) that extends perpendicular to the swivel axis (D) of the swivel element (25).

9. Holding device according to any of the preceding Claims 1 to 8, **characterized by** the fact that the retaining body (21) has a contact face (41) for an adjusting lever (40) of the latch hook (27) to engage with in the clamped position thereof, and that the angular contact face (39) is such that a maximum height (H) of said angular face (39) is greater than a maximum swivel stroke of the adjusting lever (40) in axial direction.

10. Holding device according to any of the preceding Claims 1 to 9, **characterized by** the fact that a pressure plate (28) is arranged in a seat of the retaining body (21) in a way permitting axial movement thereof.

11. Holding device according to any of the preceding Claims 1 to 10, **characterized by** the fact that the swivel element (25) is provided with a recess (42) such that an end of a luggage rod introduced into said recess is secured to the swivel element (25) in a way preventing it from coming off when the retaining body (21) is clamped.

## Revendications

1. Dispositif de retenue pour la fixation de barres porte-bagages, de filets, de sacs ou de pièces analogues, sur des rails de retenue (10, 24), qui sont montés dans un compartiment à bagages de véhicules automobiles, avec un organe de retenue (1, 21), qui est fixé, dans une position de serrage, sur le rail de retenue (10, 24), et qui est monté, mobile le long du rail de retenue (10, 24), lequel dispositif comprend un élément de serrage (2, 6 ; 27, 28), qui fixe l'organe de retenue (1, 21) sur le rail de retenue (10, 24), dans une position de serrage, et un élément d'actionnement (4) pour amener l'élément de serrage (2, 6 ; 27, 28) d'une position de serrage à une position de non serrage, dans laquelle l'organe de retenue (1, 21) peut être déplacé le long du rail de retenue (10, 24), **caractérisé en ce que** l'élément d'actionnement (4) est conçu sous la forme d'un élément rotatif (25), mobile autour d'un axe de rotation (D), qui, pour amener l'organe de retenue (1, 21) dans la position de serrage, agit sur des moyens d'ajustage (27, 28, 31, 33) de sorte que, dans une position de rotation de l'élément rotatif (25), un premier élément de serrage (27) appuie contre le rail de retenue (24), dans la direction perpendiculaire à l'axe de rotation (D) de l'élément rotatif (25), et / ou un deuxième élément de serrage (28) appuie contre le rail de retenue (24), dans la direction axiale de l'élément rotatif (25).

2. Dispositif de retenue selon la revendication 1,
**caractérisé en ce que** les moyens d'ajustage (27, 28, 31, 33) comprennent un organe de conversion du mouvement de rotation (31), qui est relié, solidaire en rotation, à l'élément rotatif (25), et qui présente, d'une part, un élément de déplacement transversal (33), destiné à agir sur le premier élément de serrage (27), et, d'autre part, un élément de déplacement axial (33), destiné à agir sur le deuxième élément de serrage (28).

3. Dispositif de retenue selon revendication 1 ou 2, **caractérisé en ce que** l'élément de déplacement axial (33) de l'organe de conversion du mouvement de rotation (31) présente une surface d'ajustage (6), qui, s'étendant transversalement par rapport à la direction axiale de l'élément rotatif (25), est pressée contre le deuxième élément de serrage (28) par l'intermédiaire d'un ressort axial (38) précontraint.

4. Dispositif de retenue selon l'une des revendications 1 à 3, **caractérisé en ce que** l'élément de déplacement transversal de l'organe de conversion du mouvement de rotation (31) présente une surface d'excentrique (14), qui s'étend dans la direction périphérique, ou une surface oblique (33), qui s'étend dans la direction périphérique.

5. Dispositif de retenue selon l'une des revendications 1 à 4, **caractérisé en ce que**, comme organe de conversion du mouvement de rotation (31), est prévu une douille d'ajustage (31), avec une section centrale (32) pour le montage dans un logement de l'élément rotatif (25), à laquelle se raccorde une section en forme d'oreille (33), qui, s'étendant radialement vers l'extérieur, est pourvue d'au moins un biseau d'amorce (39) pour la réalisation d'une surface oblique, qui coopère avec une surface de guidage (34) du premier élément de serrage (27) et avec le deuxième élément de serrage (28).

6. Dispositif de retenue selon l'une des revendications 1 à 5, **caractérisé en ce que** le biseau d'amorce (39) de la surface oblique (33) présente une telle longueur et / ou une telle pente que, dans la position de serrage de l'organe de retenue (1, 21), la section en forme d'oreille (33), disposée axialement par rapport au ressort (38), fasse saillie à une telle distance (H) d'une surface d'amorce (36) de l'organe de retenue (21) que le deuxième élément de serrage (28) soit serré sur une face antérieure (26) du rail de retenue (24).

7. Dispositif de retenue selon l'une des revendications 1 à 6, **caractérisé en ce que** l'axe de rotation (D) de l'élément rotatif (25) s'étend perpendiculairement par rapport à la face antérieure (26) du rail de retenue (24).

8. Dispositif de retenue selon l'une des revendications 1 à 7, **caractérisé en ce que** le crochet d'arrêt (27) est monté à pivotement autour d'un axe de pivotement (S) sur l'organe de retenue (21), ledit axe de pivotement (S) étant disposé perpendiculairement par rapport à un axe de rotation (D) de l'élément rotatif (25).

9. Dispositif de retenue selon l'une des revendications 1 à 8, **caractérisé en ce que** l'organe de retenue (21) présente une surface de butée (41), contre laquelle porte un levier d'ajustage (40) du crochet d'arrêt (27), quand celui-ci est en position de blocage, et que la surface d'amorce (39) est conçue de sorte qu'une hauteur maximale (H) du biseau d'amorce (39) soit supérieure à un déplacement de pivotement maximal du levier d'ajustage (40), dans la direction axiale (Q2).

10. Dispositif de retenue selon l'une des revendications 1 à 9, **caractérisé en ce que** la plaque de pression (28) est reçue, mobile dans la direction axiale, dans un logement de l'organe de retenue (21).

11. Dispositif de retenue selon l'une des revendications 1 à 10, **caractérisé en ce que** l'élément rotatif (25) présente un évidement (42) de sorte que, lorsque l'organe de retenue (21) est en position de serrage, une extrémité d'une barre porte-bagage, introduite dans l'évidement (42), soit maintenue sur l'élément rotatif (25) sans risque de perte.
